(19) Europäisches Patentamt
European Patent Office
Office européen des brevets

(11) **EP 3 652 699 B1**

(12) **FASCICULE DE BREVET EUROPEEN**

(45) Date de publication et mention de la délivrance du brevet:
**03.08.2022 Bulletin 2022/31**

(21) Numéro de dépôt: **18735587.0**

(22) Date de dépôt: **06.07.2018**

(51) Classification Internationale des Brevets (IPC):
**G06F 30/18** *(2020.01)*  **H02J 3/00** *(2006.01)*

(52) Classification Coopérative des Brevets (CPC):
**H04L 45/00; G06Q 90/00**

(86) Numéro de dépôt international:
**PCT/EP2018/068358**

(87) Numéro de publication internationale:
**WO 2019/011800 (17.01.2019 Gazette 2019/03)**

(54) **FIABILITÉ DE CARTOGRAPHIES DE RÉSEAUX**

ZUVERLÄSSIGKEIT VON NETZWERKABBILDUNGEN

RELIABILITY OF NETWORK MAPPINGS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2017 FR 1756528**

(43) Date de publication de la demande:
**20.05.2020 Bulletin 2020/21**

(73) Titulaire: **Enedis**
**92079 Paris La Defense Cedex (FR)**

(72) Inventeurs:
• **EL KHARRAT, Caroline**
**69410 Champgne au Mont d'Or (FR)**
• **ACHAICHIA, Pierre**
**44000 Nantes (FR)**

(74) Mandataire: **Plasseraud IP**
**66, rue de la Chaussée d'Antin**
**75440 Paris Cedex 09 (FR)**

(56) Documents cités:
**WO-A1-2011/144848    US-A- 5 742 795**

• **DocTB: "DOSSIER LINKY", Canard PC Hardware , no. 28 16 mars 2016 (2016-03-16), pages 68-81, XP002779821, Extrait de l'Internet: URL:https://www.cpchardware.com/download/hw28_linky.pdf [extrait le 2018-04-09]**

## Description

L'invention relève du domaine de la cartographie de réseaux physiques, en particulier de réseaux de distribution électrique.

La gestion d'un réseau de distribution électrique nécessite d'assurer de nombreuses tâches, notamment d'intervenir rapidement pour réparer les installations en cas d'incident, de raccorder de nouveaux nœuds au réseau existant, d'assurer en temps réel un équilibrage des puissances sur le réseau afin de limiter les risques de surcharge locale, de planifier des interventions pour faire évoluer le réseau en prévision de besoins et contraintes futurs. Classiquement, les Systèmes d'Information Géographique (SIG) constituent un type d'outil à la disposition des gestionnaires de réseau pour assurer de telles tâches. De tels SIG contiennent notamment des cartographies du réseau de distribution électrique. Les cartographies contiennent des données organisées de manière à représenter, le plus fidèlement possible, le réseau physique et les installations qui le constituent. En pratique, les données du SIG doivent être entrées et mises à jour manuellement chaque fois que nécessaire ou qu'une intervention sur le réseau est mise en œuvre. Des erreurs humaines entraînent des imprécisions et des incohérences dans les SIG par rapport à la réalité du réseau physique. Or, chaque différence entre le réseau physique de distribution et les informations s'y rapportant peut entraîner des incidents et des interventions inefficaces ou contre-productives.

Souvent, la détection de telles erreurs relève du hasard. Par exemple, un opérateur sur le terrain constate une erreur dans une cartographie et la signale. Souvent, réparer une telle erreur nécessite le déplacement d'un second opérateur pour identifier précisément l'erreur, la caractériser et enfin pour la corriger. La tenue à jour des données du SIG est complexe, coûteuse et peu efficace. La vérification des données est rarement mise en œuvre. Pour certains réseaux électriques, les données ne sont pas répertoriées et organisées informatiquement. Le SIG est inexistant et reste à créer.

En outre, de nombreux SIG présentent une structure qui n'est pas normalisée et ne sont donc pas directement compatibles les uns avec les autres. Dans des situations où plusieurs acteurs du secteur doivent coopérer, l'échange d'information est complexe. Le document US5742795 décrit un procédé de cartographie réseau connu de l'art antérieur.

L'invention vient améliorer la situation.

Il est proposé un procédé mis en œuvre par ordinateur de construction d'une cartographie d'un réseau de distribution électrique selon la revendication 1.

Un tel procédé permet d'automatiser la construction de cartographies, par création de nouvelles cartographies, ou encore par vérification et/ou correction de cartographies existantes. La plupart des erreurs peuvent être détectées préventivement, sans attendre une éventuelle détection par un opérateur envoyé sur le terrain.

Détecter rapidement les erreurs permet de corriger rapidement les plus simples et de planifier à l'avance la correction des plus complexes. Les erreurs identifiées peuvent être corrigées avant de nuire à la gestion du réseau. Dans la plupart des cas, la correction des erreurs elles-mêmes peut être automatisée, ou au moins être mise en œuvre sans que l'intervention d'un opérateur sur le terrain ne soit nécessaire. Le procédé peut être mis en œuvre, par exemple, au moyen de dispositifs communicants existants sur le réseau. Dans ce cas, l'installation d'équipements dédiés est superflue. Par exemple, des compteurs communiquant, connus sous la référence commerciale « Linky » sont en cours de déploiement en France. De tels compteurs comprennent un module de communication apte à la mise en œuvre du procédé, chaque compteur correspondant à un nœud consommateur, parfois appelé « Point De Livraison » (PDL).

Selon un autre aspect, il est proposé un système comprenant au moins un concentrateur et une unité de traitement, l'unité de traitement incluant une mémoire apte à stocker au moins une cartographie d'un réseau de distribution électrique. Le réseau de distribution électrique comprend au moins un nœud source incluant une pluralité de sorties, et une pluralité de nœuds consommateurs alimentés chacun par une unique sortie. À chaque couple de nœuds correspond un lien reliant les deux nœuds l'un à l'autre. Chacun des nœuds consommateurs est apte à communiquer avec le nœud source par au moins une route de communication sur le réseau de distribution électrique. Chaque route est formée :

- d'un unique lien reliant directement le nœud source au nœud consommateur, ou
- d'une suite de liens reliant indirectement le nœud source au nœud consommateur par l'intermédiaire d'au moins un autre nœud consommateur formant un nœud relais.

Le concentrateur est agencé pour

a) pendant au moins une période d'observation et pour chaque couple de nœuds consommateurs, compter le nombre de fois que le lien correspondant forme partie d'une route de communication entre le nœud source et un nœud consommateur,

L'unité de traitement est agencée pour réceptionner les données de comptage et

b) construire un graphe dans lequel chaque sommet correspond à un nœud consommateur et le poids de chaque arc entre deux sommets est attribué en fonction du nombre de fois que le lien qui relie le couple de nœuds consommateurs correspondant forme partie d'une route de communication établie entre le nœud source et un nœud consommateur,

c) partitionner les sommets du graphe en groupes par application d'algorithmes agencés de sorte que :

- deux sommets entre lesquels le poids de l'arc est élevé et/ou deux sommets partageant un nombre élevé de voisins communs tendent à être classés dans un même groupe, tandis que
- deux sommets classés dans des groupes distincts tendent à présenter un poids de lien faible ou nul et/ou à posséder peu de voisins communs.

Selon un autre aspect, il est proposé un programme d'ordinateur apte à être mis en œuvre en un procédé de construction d'une cartographie tel que les procédés définis dans les présentes. Selon encore un autre aspect, il est proposé un support d'enregistrement non transitoire lisible par un ordinateur sur lequel est enregistré un programme comprenant des instructions pour la mise en œuvre d'un des procédés proposés dans les présentes.

Les caractéristiques suivantes peuvent, optionnellement, être mises en œuvre. Elles peuvent être mises en œuvre indépendamment les unes des autres ou en combinaison les unes avec les autres :

- Les poids sont attribués en fonction du nombre de fois que le lien correspondant forme partie d'une route pour un nombre constant de routes entre chaque couple de nœud source et de nœud consommateur. Ceci permet d'améliorer la représentativité de la période d'observation, y compris si certains des nœuds consommateurs sont plus actifs que d'autres en établissant plus de routes de communication durant la période d'observation que durant une période de fonctionnement usuelle.
- À l'issu du comptage, une opération intermédiaire d'échantillonnage aléatoire est mise en œuvre et les opérations de partitionnement sont effectuées à partir des échantillons obtenus, la succession des opérations d'échantillonnage, de construction de graphe et de partitionnement font l'objet d'une boucle itérative. Les biais de mesure sont ainsi réduits.
- Les communications entre les nœuds s'établissent selon une architecture distribuée par Courant Porteur en Ligne sur le réseau de distribution électrique. La présence d'un réseau de communication dédié est alors superflue. Les réseaux de distribution électriques pourvus de modules communicants peuvent être rendus compatibles avec peu ou pas de modifications matérielles.
- Le procédé selon l'invention comprend en outre :

d) comparer la composition des groupes obtenue au rattachement des nœuds consommateurs sur les sorties selon une cartographie préexistante,
e) déduire de la comparaison l'exactitude de la cartographie ou l'existence d'au moins une erreur,
f) en cas de déduction d'au moins une erreur, corriger la cartographie en fonction de la composition des groupes obtenue.

Ceci permet de vérifier, de corriger et/ou de mettre à jour des cartographies existantes. Le partitionnement en groupe peut être combiné et croisé avec d'autres données déjà contenues dans les cartographies existantes.

- Le partitionnement inclut la mise en œuvre d'un algorithme divisif, d'un algorithme agglomératif, d'un algorithme d'optimisation par vérification de densité ou d'une combinaison de tels algorithmes. De tels algorithmes peuvent être mis en œuvre en grande partie de manière automatisé tout en permettant d'atteindre une haute fiabilité des informations de cartographie.

D'autres caractéristiques, détails et avantages de l'invention apparaîtront à la lecture de la description détaillée ci-après, et à l'analyse des dessins annexés, sur lesquels :

- la figure 1 est une représentation partielle des données d'une cartographie à vérifier/corriger,
- les figures 2 et 3 montrent chacune un diagramme fonctionnel d'un mode de réalisation d'une partie au moins d'un procédé selon l'invention,
- les figures 4 et 5 montrent chacune un graphe établi au cours d'un procédé selon l'invention,
- les figures 6, 7 et 8 montrent des détails d'un procédé selon l'invention,
- la figure 9 est une représentation d'une partition mise en œuvre selon le procédé,
- les figures 10, 11 et 12 montrent chacune une partie d'un mode de réalisations selon l'invention,
- la figure 13 montre une partie d'un mode de réalisations selon l'invention, et
- les figures 14 et 15 montrent des graphes obtenus au cours d'un procédé selon l'invention.

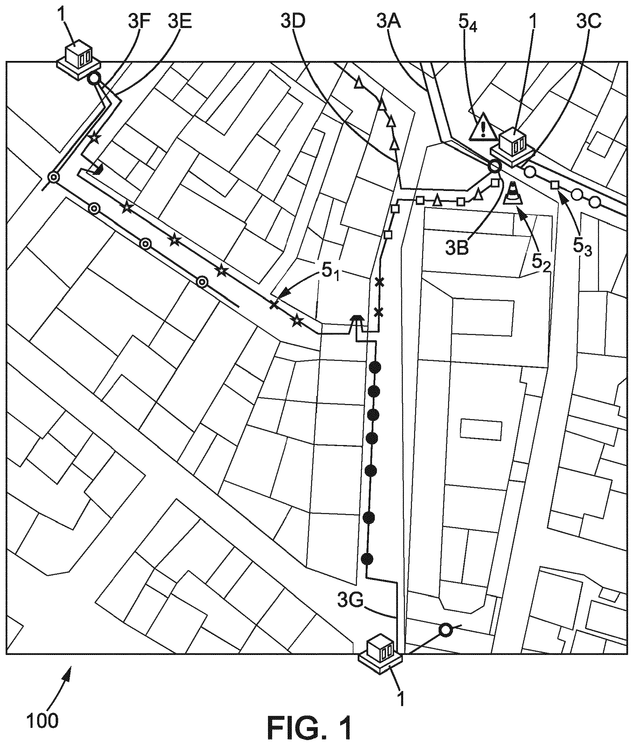

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.
Dans la suite, le terme de cartographie désigne un ensemble de données représentatives de l'organisation mutuelle des équipements d'un réseau telles que des données géographiques et/ou de raccordement. La carte, ou plan de quartier, de la figure 1 est un exemple de représentation visuelle d'une partie des données d'une cartographie. Une telle représentation vise essentiellement à faciliter la compréhension. Une cartographie d'un réseau peut comprendre d'autres données que celles représentées sur le plan de quartier, notamment des données non strictement géographiques telles que des puissances nominales associées à chaque nœud, des caractéristiques relatives aux câblages présents, ou encore les caractéristiques techniques de chaque équipement.

Dans l'exemple de la figure 1, la cartographie 100 comprend trois nœuds source 1 comprenant décrit ici, un nœud source 1 correspond à un transformateur disposé entre le réseau de transport moyenne tension (ou haute tension type A HTA) et le réseau de distribution basse tension (BT) en aval. Par exemple, chacun des nœuds source 1 comprend entre une et dix lignes. En général, chaque ligne s'étend dans un quartier ou une rue pour alimenter les nœuds consommateurs 5 qui s'y trouvent. Le réseau Basse Tension (BT) choisi en exemple présente une structure arborescente. Le sommet de la structure arborescente correspond à un nœud source 1, ici un poste de transformation HTA/BT, alimente un ensemble de sorties 3. Chaque sortie 3 se prolonge par une ligne constituée elle-même d'une succession de tronçons. Les nœuds consommateurs 5 forment des points de branchements distribués le long des tronçons.

Les nœuds consommateurs 5 correspondent sensiblement aux « Point De Livraison (PDL) ». Chaque nœud consommateur 5 forme une interface entre le réseau de distribution basse tension BT et un réseau électrique secondaire, généralement privé. En pratique, le nœud consommateur 5 est matérialisé par un ensemble d'équipements, dont un compteur propre à comptabiliser la consommation électrique du réseau secondaire à des fins de facturation. Par abus de langage, les nœuds consommateurs 5 peuvent être appelés compteurs.

La cartographie 100 associe chaque nœud source 1 et chaque nœud consommateur 5 à une position géographique, par exemple une adresse postale, et/ou à un identifiant usager/poste. Plusieurs nœuds consommateurs 5 peuvent être associés à un identifiant d'usager commun et/ou à une position géographique commune. Plusieurs nœuds 1, 5 associés respectivement à un identifiant peuvent en outre être associés à une position géographique commune, par exemple pour les logements collectifs ou les zones denses.

Pour un usage domestique, tel qu'une habitation ou un commerce, un compteur alimenté en monophasé est généralement suffisant. Pour certains usages, notamment industriels, une alimentation en courant triphasé peut être nécessaire. Dans les exemples décrits ici, chaque sortie (ou ligne) est triphasée conformément à l'usage en France. La demanderesse a constaté que la transmission de données par Courant Porteur en Ligne (CPL) entre deux phases distinctes d'une même sortie restait possible. En variante, les lignes peuvent être monophasées.

La cartographie 100 comprend en outre des associations entre des nœuds consommateurs 5 et des sorties 3. Ce dernier type d'association est une information particulièrement utile pour gérer la répartition de la puissance sur le réseau.

Ainsi, selon la cartographie 100 représentée en figure 1,

- les nœuds consommateurs 5 représentés par une croix sont associés à la sortie 3A,
- les nœuds consommateurs 5 représentés par un carré sont associés à la sortie 3B,
- les nœuds consommateurs 5 représentés par un rond vide sont associés à la sortie 3C,
- les nœuds consommateurs 5 représentés par un triangle sont associés à la sortie 3D,
- le nœud représenté par un cône de signalisation est répertorié dans la cartographie 100 mais n'est associé à aucune sortie, et
- le nœud représenté par un point d'exclamation n'est pas du tout répertorié dans la cartographie 100.

En théorie, les associations contenues dans la cartographie 100 devraient correspondre à la réalité physique sur le terrain. Chaque nœud consommateur 5 devrait être alimenté en énergie électrique par la sortie 3 du nœud d'alimentation 1 à laquelle il est associé dans la cartographie 100. Cependant, la cartographie 100 contient des erreurs et des informations sont manquantes.

Dans le présent contexte, volontairement simpliste par rapport aux situations réelles, les erreurs et informations manquantes sont connues et identifiées. En outre, la représentation visuelle des câblages sur une carte permet instinctivement de deviner certaines des erreurs et leurs corrections. En pratique, le nombre de données et leur complexité rend une telle détection fastidieuse, voire impossible, sans recherche ciblée et sans l'assistance d'outils informatiques.

Dans l'exemple de la figure 1 et d'après la cartographie 100, le nœud consommateur $5_1$ est alimenté par la sortie 3A (représenté par une croix). Il s'agit d'une erreur: le nœud consommateur $5_1$ est en réalité alimenté par la sortie 3E.

Dans l'exemple de la figure 1 et d'après la cartographie 100, le nœud consommateur $5_2$ (représenté par un cône de chantier) n'est pas alimenté, ce qui pourrait correspondre par exemple à un compteur installé mais non encore relié. Un opérateur doit donc à *priori* vérifier le raccordement sur place pour entrer les données pertinentes dans la cartographie 100.

Dans l'exemple de la figure 1 et d'après la cartographie 100, le nœud consommateur $5_3$ (représenté par un carré) est alimenté par la sortie 3B. Il s'agit d'une erreur: le nœud consommateur $5_3$ est en réalité alimenté par la sortie 3C.

Dans l'exemple de la figure 1 et d'après la cartographie 100, le nœud consommateur $5_4$ n'existe pas (car non répertorié ; représenté par un point d'exclamation). Il s'agit d'une erreur : le nœud consommateur $5_4$ existe et est alimenté par l'une des sorties 3.

Une première méthode connue de détection/correction d'erreurs consiste à comparer la sortie 3 théorique d'un nœud consommateur 5 à la sortie 3 théorique des nœuds consommateurs 5 géographiquement voisins du premier. Ceci suppose que les données utilisées pour la comparaison soient disponibles, fiables, complètes et précises. Ces hypothèses sont rarement vérifiées. En particulier, une telle méthode ne donne pas de résultat probant dans les zones denses ou ayant subi de nombreux changements non encore transcrits dans la cartographie 100.

Pour les nœuds consommateurs $5_1$, $5_2$ et $5_4$, le rattachement au nœud source 1 est erroné ou manquant. Pour le nœud consommateur $5_3$, le rattachement au nœud source 1 est correct mais le rattachement à la sortie 3 est erroné. Ce dernier cas d'erreur peut être considéré comme le plus difficile à détecter et à corriger. Par exemple, une analyse basée sur la position géographique du nœud ne permet pas de déterminer de manière fiable la sortie 3 par laquelle il est alimenté.

Chacun des nœuds consommateurs 5 comprend un module de communication, ou interface de communication, apte à communiquer avec d'autres modules de communication via le réseau de distribution électrique. Par exemple, les compteurs intelligents ou AMM pour *«Automated Meter Management»* sont aptes à échanger des données avec un concentrateur. Les concentrateurs sont généralement disposés à proximité des nœuds sources 1. Le concentrateur collecte les données de plusieurs AMM.

Dans l'exemple décrit ici, les concentrateurs transmettent à leur tour les informations à une unité de traitement commune et distante, par exemple via un réseau de téléphonie mobile. Ainsi, l'unité de traitement de données comprend un processeur couplé de manière opérationnelle avec une mémoire pour mettre en œuvre au moins en partie le procédé défini dans les présentes. En variante, une partie au moins du traitement des données peut être mis en œuvre par les concentrateurs et/ou localement par des équipements voisins des concentrateurs. Par exemple, les opérations de comptage peuvent être effectuées par les concentrateurs, puis des données relatives aux comptages sont transmises à l'unité de traitement.

Dans certains cas, analyser et comparer les variations de tension enregistrées par différents nœuds consommateurs 5 permet d'identifier des correspondances et donc de déterminer quels sont les nœuds consommateurs 5 reliés à une source 3 commune. Cependant, des changements de tension mesurés sur un nœud consommateur 5 peuvent résulter de l'activité sur le réseau privé correspondant et/ou sur d'autres réseaux privés alimentés par la même sortie 3. La fiabilité d'une telle analyse est donc faible. En outre, cela nécessite des mesures fréquentes et à des instants coïncidents pour tous les nœuds consommateurs 5. Par ailleurs, cela implique d'enregistrer à long terme des mesures de consommations précises, datées et associées à chaque nœud consommateur. De tels stockages et traitements de données pourraient permettre de déduire des informations précises sur les usages de chaque consommateur. Faciliter par des moyens techniques un tel usage de données à caractère privé n'est généralement pas souhaitable. Autrement dit, la collecte automatisée de telles données pourrait être aisément détournée de l'application prévue (la vérification du contenu des SIG) pour un usage qui nuirait à la confidentialité et à la préservation de la vie privée. Certaines normes et réglementations tendent à restreindre la mise en place de systèmes d'information pouvant être aisément détournés à de telles fins.

Parmi les AMM développés, certains comprennent des modules de communication fonctionnant par Courant Porteur en Ligne (CPL). Ainsi, les données sont échangées par le réseau électrique lui-même sans qu'il soit nécessaire de prévoir un réseau de communication dédié entre les nœuds source 1 et les nœuds consommateurs 5. Le réseau de communication utilise physiquement le réseau câblé électrique.

Dans certains cas, la technologie de communication mise en œuvre est de type maillée : un nœud consommateur 5 est apte à communiquer avec un nœud consommateur 5 voisin. Par exemple, les compteurs « Linky » déployés en France sont équipés de module CPL fonctionnant sous protocole « G3 ». Le protocole G3 est adapté spécifiquement aux caractéristiques des réseaux électriques et permet notamment de créer un réseau de communication décentralisé (ou distribué). Ainsi, les nœuds consommateurs 5 les plus éloignés du nœud source 1, ou nœuds terminaux, peuvent échanger efficacement des données avec certains autres nœuds consommateurs 5, ou nœuds commutateurs, faisant office de relais/routeurs. Autrement dit, l'information est transmises de proche en proche d'un nœud consommateur 5 à un nœud consommateur 5 voisin jusqu'au nœud source 1. Ceci permet de pallier les atténuations inévitables du signal CPL sur de longues distances. Ceci permet en outre une adaptation automatique des routes de communication : deux nœuds peuvent communiquer l'un avec l'autre à plusieurs reprises via diverses routes en fonction des situations et notamment en fonction de la disponibilité des équipements.

Les routes de communication entre les nœuds consommateurs 5 s'établissent de façon préférentielle entre les nœuds consommateurs 5 reliés à une sortie 3 commune.

Dans la suite, on appelle « route de communication » la route reliant un nœud source 1 à un nœud consommateur 5 terminal. Les routes sont référencées $9_{i,j}$, avec l'indice i identifiant le nœud source 1 et l'indice j identifiant le nœud consommateur 5. Pour un couple d'un nœud source 1 et d'un nœud consommateur 5 terminal, plusieurs routes $9_{i,j}$ différentes peuvent exister. Chaque route 9 est formée :

- d'un unique lien $7_{i,j}$ (ou relation) reliant directement le nœud source 1 au nœud consommateur 5, ou
- d'une suite de liens $7_{i,x}$, $7_{x,y}$, $7_{y,z}$, $7_{z,j}$ reliant indirectement le nœud source 1 au nœud consommateur 5 par l'intermédiaire d'au moins un nœud consommateur $5_x$, $5_y$, $5_z$ formant nœud relais. Dans le présent contexte, deux routes $9_{i,j}$ reliant le même couple de nœud i, j par des liens 7 différents sont distinguées l'une de l'autre.

Un lien $7_{x,y}$ est défini comme un sous ensemble d'une route 9 et un chemin reliant un premier nœud (nœud source 1 ou nœud consommateur 5) à un second nœud (nœud source 1 ou nœud consommateur 5). Dans un réseau, à chaque couple de nœuds x, y correspond un lien $7_{x,y}$ reliant les deux nœuds x, y l'un à l'autre. Chaque lien $7_{x,y}$ est constitué d'une succession d'un ou plusieurs tronçons du réseau électrique. En pratique, deux liens $7_{x,y}$ constitués de différents tronçons du réseau électriques peuvent être utilisés pour transmettre des données entre le premier nœud x et le second nœud y. Dans le présent contexte, ces différences sont ignorées et il n'est pas fait de distinction entre deux liens $7_{x,y}$ établis via différents tronçons du réseau. Autrement dit, il est considéré que, pour chaque couple x, y de nœuds, il existe un unique lien $7_{x,y}$. Un lien $7_{x,y}$ peut relier deux nœuds physiquement distants l'un de l'autre, y compris si d'autres nœuds sont présents entre les deux premiers. Par exemple, une route $9_{i,j}$ peut comprendre des liens $7_{x,y}$ qui se superposent au moins en partie sur le réseau physique de sorte que, sur un tronçon de câble, les données peuvent transiter dans deux sens opposés pour une même route $9_{i,j}$.

Dans une première partie du procédé, un graphe est établi. Le graphe est représentatif des liens $7_{x,y}$ utilisés lors de l'établissement des routes de communications $9_{i,j}$.

Dans une opération 201 de la première partie du procédé, on compte le nombre de fois que chaque lien $7_{x,y}$, $7_{x,z}$, $7_{y,z}$ forme partie d'une route $9_{i,j}$ de communication entre un nœud source $1_i$; et un nœud consommateur $5_j$ terminal. L'opération 201, le comptage, est mise en œuvre pendant une durée d'observation et pour chaque couple de nœuds consommateurs x, y ; y, z ; x, z.

Dans une opération 202 de la première partie du procédé, on construit un graphe dans lequel chaque sommet correspond à un nœud consommateur $5_x$, $5_y$, $5_z$ et le poids $p_{x,y}$, $p_{y,z}$, $p_{x,z}$ de chaque arc entre deux sommets est attribué en fonction du nombre de fois que le lien $7_{x,y}$, $7_{y,z}$, $7_{x,z}$ qui relie le couple de nœuds consommateurs $5_x$, $5_y$ ; $5_x$, $5_z$ ; $5_y$, $5_z$ forme partie d'une route 9 de communication établie entre un nœud source 1 et un nœud consommateur 5 terminal.

Plus la durée d'observation et de comptage est longue, plus le graphe obtenu est représentatif de la variété des routes de communication $9_{i,j}$ établies, et plus les ressources informatiques nécessaires au traitement sont importantes.

Dans un premier mode de réalisation, l'opération 202 est mise en œuvre en tenant compte de la totalité des résultats (des comptages) de l'opération 201 précédente. Le graphe obtenu est considéré comme « complet ». L'opération 202 est alors dépourvue d'échantillonnage. La suite du procédé peut être mise en œuvre sur ce seul graphe complet. Dans ce cas, il convient de sélectionner la durée et la période d'observation de manière à limiter le nombre de données à traiter en fonction des ressources informatiques disponibles tout en préservant une représentativité des observations.

Dans un deuxième mode de réalisation, l'opération 202 est mise en œuvre en tenant compte d'une partie seulement des routes de communication $9_{i,j}$ surveillées à l'opération 201. Autrement dit, un ensemble de routes de communication $9_{i,j}$ est extrait et seules les comptages de liens $7_{x,y}$ correspondants sont retenus à l'issu du comptage. Afin d'améliorer la représentativité du graphe, l'échantillonnage est de préférence aléatoire. Cela permet de sélectionner a *posteriori* le nombre de données à traiter pour construire les graphes. L'échantillonnage peut aussi être temporel : plusieurs comptages sont effectués sur des plages temporelles distinctes. Les graphes obtenus sont considérés comme « échantillonnés ». La suite du procédé peut être mise en œuvre sur plusieurs des graphes obtenus après échantillonnage.

Afin d'améliorer la représentativité du graphe, et indépendamment des deux modes de réalisation qui précèdent, le nombre de routes $9_{i,j}$ pour chaque nœud consommateur j terminal pour lequel les liens $7_{x,y}$ sont comptés est rendu le plus homogène possible, et de préférence égal, par exemple par échantillonnage. Autrement dit, le nombre de routes surveillées pendant l'opération 201 est de préférence identique pour chaque nœud consommateur $5_j$ terminal.

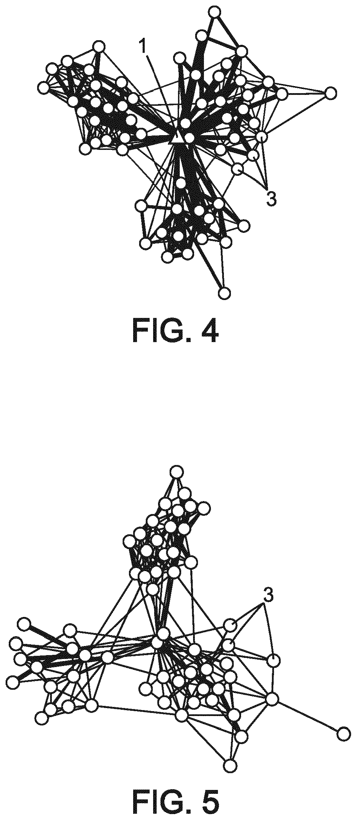

Dans le graphe obtenu, plus la fréquence d'utilisation du lien $7_{x,y}$ entre deux nœuds x,y est élevée, plus la force de la relation unissant les deux nœuds x,y est importante. La figure 4 présente un exemple d'une représentation d'un graphe obtenu, ici à partir des routes de communication sous protocole CPL G3. Le nœud central correspond à l'unique nœud source 1 d'un réseau d'essai (sous forme d'un triangle sur la figure 1). Le nœud source 1 est fortement lié à la plupart des nœuds consommateur 5. Cela s'explique par le positionnement particulier du nœud source 1 au centre du réseau en arborescence. Dans les exemples décrits ici, les nœuds source 1 sont ignorés lors de la construction du graphe. Le résultat de la suppression du nœud source 1 de la figure 4 est représenté en figure 5. Cela peut être effectué par suppression effective du sommet correspondant au nœud source 1 ou en ne comptant pas les liens $7_{x,y}$ pour lesquels x ou y correspond au nœud source 1 lors de l'opération 201.

Dans certaines situations, des nœuds consommateurs 5 peuvent présenter des liens uniquement avec le nœud source 1. Cela correspond généralement au cas des nœuds géographiquement voisins du nœud source 1. Les routes de communication $9_{i,j}$ établies correspondantes sont toutes constituées de l'unique lien $7_{i,j}$ direct entre le nœud source $1_i$ et ledit nœud consommateur $5_j$ terminal, sans nœud consommateur 5 formant relais. Dans ce cas, les sommets de tels nœuds consommateurs 5 se trouvent isolés (non reliés aux autres sommets) après suppression du sommet du nœud source 1. De tels nœuds ne peuvent être localisés. Les sommets correspondants sont donc aussi supprimés du graphe.

Le graphe obtenu peut être représenté sous la forme de la matrice G suivante, pour laquelle l'indice 1 correspond au nœud source 1 et est donc absent et les indices 2 à N correspondent respectivement à chacun des N-1 nœuds consommateurs 5, nœuds isolés exclus :

$$G = \begin{bmatrix} p_{2,2} & \cdots & p_{2,N} \\ \vdots & \ddots & \vdots \\ p_{N,2} & \cdots & p_{N,N} \end{bmatrix}$$

Dans une deuxième partie du procédé, les nœuds consommateurs 5 sont répartis en groupes par partitionnement des sommets du graphe. Le partitionnement est mis en œuvre par application d'algorithmes de détection de groupes, agencés de manière à tendre vers les deux objectifs suivants :

- deux sommets entre lesquels le poids $p_{x,y}$ de l'arc est élevé et/ou deux sommets partageant un nombre élevé de voisins communs appartiennent au même groupe, tandis que
- deux sommets appartenant à deux groupes distincts ont un poids de lien faible ou nul et à posséder peu de voisins communs. Autrement dit, les algorithmes sont agencés pour définir des groupes, ou communautés, pour lesquels les nœuds 5 d'un même groupe sont fortement connectés entre eux et les connexions intergroupes sont faibles ou nulles. Chaque nœud 5 est affecté à un unique groupe.

Des exemples d'algorithmes sont décrits ci-après. Les algorithmes peuvent être classés en trois types :

- les algorithmes divisifs détectent les liens intergroupes et les suppriment pour mettre en évidence les groupes ;
- les algorithmes agglomératifs rassemblent des nœuds ou des groupes de nœuds présentant des similarités dans un groupe commun ;
- les algorithmes d'optimisation par vérification de densité : des fonctions objectives sont maximisées pour définir des groupes de nœuds sur la base de critères de densité.

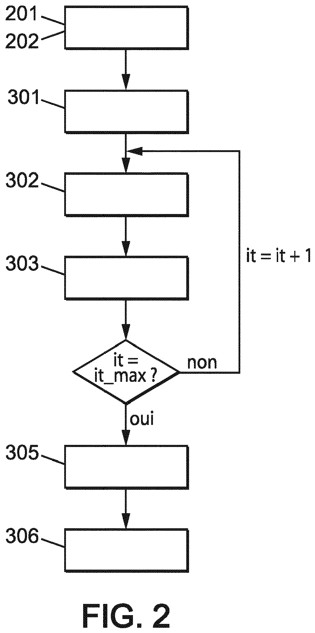

Dans un premier exemple du procédé, la deuxième partie du procédé comprend la mise en œuvre d'un algorithme agglomératif. Cette deuxième partie est, par exemple, appliquée sur une pluralité de graphes échantillonnés obtenus par la mise en œuvre de la première partie du procédé selon le second mode de réalisation. L'algorithme agglomératif comprend par exemple l'algorithme de Louvain. Le premier exemple de procédé est représenté par le logigramme de la figure 2.

L'algorithme de détection de groupes est appliqué sur une pluralité de graphes échantillons. Chaque graphe échantillon est obtenu par tirage aléatoire de routes de communication 9 observées sur une durée d'un mois et pour les lesquels les liens 7 sont comptés.

Un nombre identique de routes 9 pour chaque nœud terminal $5_j$ est retenu pour le comptage des liens 7. Ainsi, le traitement des nœuds terminaux $5_j$ est équitable et la base d'observation reste aussi diversifiée que possible. Si des nœuds terminaux 5 sont plus actifs que d'autres, cela ne crée pas de biais de représentativité (une hétérogénéité des routes établies pour chaque nœud terminal 5 est sans conséquence). Le respect d'un tel critère peut être assimilé à un rééchantillonnage, ou « *Bootstrap* » en anglais, pour une inférence statistique. Le nombre de routes 9 que l'on choisit de surveiller pour compter les liens 7 est lui-même un hyperparamètre : en jouant sur ce nombre, il est possible de sélectionner la représentativité du graphe et les ressources (informatiques) de traitement qui sont nécessaires.

Le partitionnement par algorithme de Louvain est basé sur la maximisation d'une métrique estimant la qualité de la partition réalisée, appelée « modularité ». La modularité d'une partition mesure la différence entre la proportion de liens internes aux groupes et la même quantité dans un graphe équivalent mais défini de manière aléatoire dans lequel aucune structure de groupe n'est attendue. La modularité Q d'une partition P={$c_1$,..., $c_k$} est définie comme suit :

$$Q = \frac{1}{2m} \sum_{i,j} \left[ p_{i,j} - \frac{k_i k_j}{2m} \right] \delta(c_i, c_j)$$

avec $p_{i,j}$ étant le poids associé au lien entre les nœuds i et j, $k_i = \frac{1}{2} \sum_j p_{i,j}$ étant la somme des poids des liens du nœud i, $\delta(c_i, c_j) = 1$ si et seulement si $c_i=c_j$.

Le facteur $\frac{1}{2m}$ est ajouté afin de normaliser les valeurs possibles de Q dans l'intervalle [-1,1], avec $m = \frac{1}{2} \sum_{ij} p_{i,j}$.

La modularité Q est positive pour un graphe et une partition pour lesquels il n'y a aucun lien (ou un arc de poids nul) entre deux nœuds de groupes différents mais au moins un lien entre deux nœuds du même groupe. La modularité Q est négative pour un graphe et une partition pour lesquels il n'y a aucun lien entre deux nœuds du même groupe mais au moins un lien entre deux nœuds de groupes différents. La modularité Q tend vers zéro lorsque l'on partitionne aléatoirement un graphe dans lequel les arcs (ou arêtes) sont distribués aléatoirement. Dans l'exemple décrit ici, il est considéré qu'une partition de graphe est significative (pertinente) si la modularité Q est supérieure ou égale à 0,3. La sélection d'un tel seuil est basée sur la littérature, et notamment sur le document suivant : M. E. J. Newman, Fast algorithm for detecting community structure in networks, Phys. Rev. E 69, 066133 (2004). En variante, des seuils différents sont choisis.

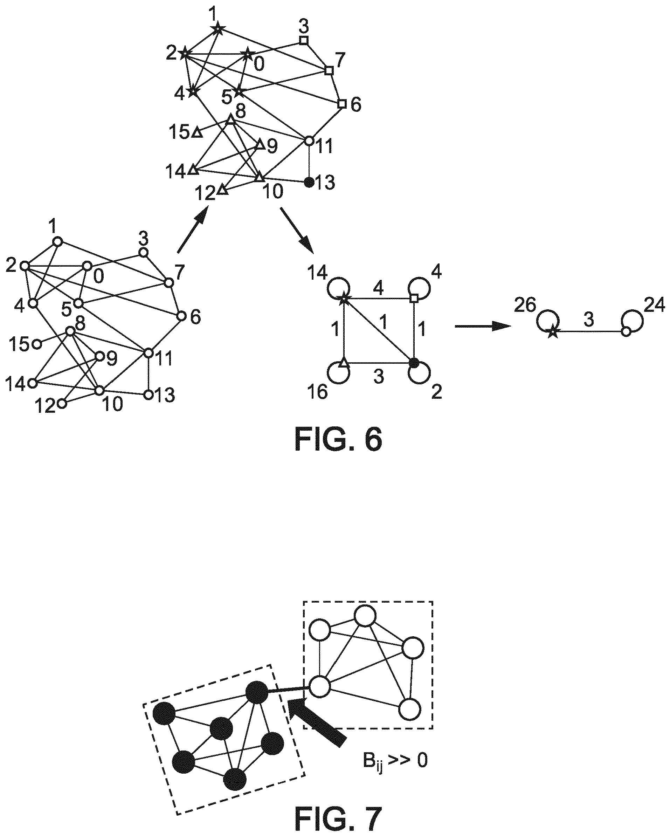

Un exemple d'application de l'algorithme de Louvain sur un graphe est représenté en figure 6. L'application de l'algorithme de Louvain peut être décomposée de la manière suivante.

Dans un état initial (représenté en bas à gauche de la figure 6, tirée de M. E. J. Newman et M. Girvan, Finding and evaluating community structure in networks, Phys. Rev. E 69, 026113 (2004) dans Newman et Girvan (2004)), le nombre de groupe est égal au nombre de nœuds/sommets du graphe. Chaque nœud est classé aléatoirement dans un groupe.

Ensuite, dans une première sous-opération, pour chaque nœud i, on estime le gain de modularité Q obtenu en retirant ce nœud i de son groupe et en le plaçant dans le groupe du nœud j. Le nœud i est déplacé dans le groupe pour lequel le gain de modularité Q est maximum, si et seulement si le gain est positif. Le nœud i est alors « réalloué ». La suite estimation-réallocation est réitérée tant que la modularité Q de la partition est améliorée. On obtient un graphe à modularité Q optimisée (représenté en haut de la figure 6).

Ensuite, dans une deuxième sous-opération, le graphe de nœuds à modularité Q optimisée est transformé en un graphe de groupes (représenté en bas au centre de la figure 6) :

- les sommets représentant chacun un nœud d'un même groupe sont fusionnés en un unique sommet représentant ledit groupe de manière à obtenir un graphe dont chaque sommet représente désormais un groupe.
- les arcs entre deux nœuds appartenant à deux groupes distincts sont fusionnés en un arc reliant désormais les deux sommets correspondant aux deux dits groupes. Ainsi chaque arc/arête représente désormais les relations intergroupes. Lors de cette fusion, le poids de chaque arc entre deux sommets-groupes est obtenu en sommant le poids de chaque arc fusionné.
- Les arcs internes des groupes (entre les nœuds d'un même groupe) sont transformés en une boucle de poids égal à la somme des poids des arcs internes.

L'application de l'algorithme de Louvain est réitérée depuis le classement aléatoire des nœuds dans les groupes tant que cela permet d'augmenter la modularité Q. Le résultat d'une seconde itération est représenté en bas à droite de la figure 6.

L'application de l'algorithme forme une heuristique au sens de l'optimisation combinatoire. La partition obtenue (représentée par le graphe obtenu) dépend de l'initialisation (aléatoire) de la partition. Ainsi la partition obtenue peut varier entre deux exécutions successives de l'algorithme. L'application de l'algorithme est donc de préférence réitérée plusieurs fois sur des graphes échantillons différents afin d'améliorer la stabilité du résultat.

La seconde partie du procédé peut comprendre la construction d'une matrice de similarité M.

La matrice de similarité M est carrée et de dimension égale au nombre de sommets du graphe, c'est-à-dire le nombre de nœuds consommateurs 5 de la cartographie 100 auquel on a retranché le nombre de nœuds non reliés au reste du graphe comme décrit ci-avant. Le graphe étant non orienté, la matrice de similarité M est symétrique. La matrice de similarité M est construite par boucles itératives, tel que cela est représenté en figure 2 et décrit en détail ci-après.

Dans une opération 301, la matrice de similarité M est initialisée à zéro. Le compteur d'itérations it est initialisé à un.

Puis, un algorithme de détection de groupes sur un graphe construit aléatoirement est mis en œuvre en une itération, par exemple selon la méthode de Louvain décrite ci-avant.

Les résultats de la détection de groupes effectuée à l'itération it courante sont sauvegardés dans la matrice M. Dans une opération 302, une matrice $D_{it}$ de détection de groupes est construite pour un graphe construit aléatoirement. La matrice $D_{it}$ est de dimension identique à celle de la matrice de similarité M. Par exemple, la matrice $D_{it}$ prend la forme d'une matrice carrée dont chaque ligne et chaque colonne correspond à un nœud. Chaque terme prend la valeur « 1 » lorsque les nœuds correspondant à l'intersection ligne-colonne appartiennent à un groupe commun et prend la valeur « 0 » dans le cas contraire. Dans une opération 303, la matrice $D_{it}$ est ajoutée à la matrice M. Autrement dit, à chaque itération de détection de groupe sur le graphe, la matrice des degrés $D_{it}$ correspondante est ajoutée à la matrice de similarité M.

Après construction, la matrice de similarité M permet d'estimer la probabilité que deux nœuds consommateurs 5 appartiennent à un groupe commun.

Après l'opération 303, il est vérifié si le critère d'arrêt des itérations est atteint. Ici, le critère d'arrêt prend la forme d'un nombre it_max d'itérations à mettre en œuvre. Si ce n'est pas le cas, le compteur d'itération est incrémenté de un, puis les opérations 302 et 303 sont réitérées sur un nouveau graphe construit aléatoirement.

Dans une opération 305, à la fin de la boucle, la matrice M est normalisée. La normalisation de la matrice M comprend une division par le nombre d'itérations effectuées ci-avant (M/it_max). La matrice de similarité M normalisée peut être vue comme la matrice d'adjacence d'un graphe dont le poids des liens correspond à la probabilité que deux nœuds appartiennent à un même groupe.

Dans le présent contexte, deux nœuds appartenant au même groupe peuvent être considérés comme étant électriquement reliés au même départ 3 d'un nœud source 1, et non seulement au même nœud source 1.

Un partitionnement final peut optionnellement être obtenu par une opération supplémentaire 306 en appliquant un algorithme de détection de groupe, tel que l'algorithme de Louvain, sur la matrice de similarité normalisée M. Chaque nœud consommateur 5 est ainsi placé dans un groupe, qui représente une structure de nœuds fortement connectés par des liens communicants et par un même rattachement électrique au niveau d'un départ du poste de transformation.

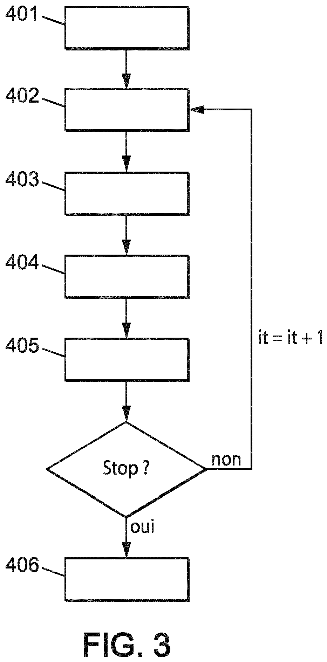

Dans un deuxième exemple du procédé, la deuxième partie du procédé comprend la mise en œuvre d'un algorithme divisif. Cette deuxième partie est, par exemple, appliquée sur un unique graphe complet obtenu par la première partie du procédé. L'algorithme divisif comprend par exemple un algorithme de calcul de centralités d'intermédiarité, par exemple celui de Girvan-Newman (ou « *edge betweenness* » en anglais). Le deuxième exemple de procédé est représenté par le logigramme de la figure 3.

Dans une opération initiale 401, un graphe obtenu selon la première partie du procédé, ici un unique graphe complet, est établi.

Puis, dans une opération 402, un algorithme de détection de groupes sur le graphe complet est mis en œuvre, par exemple l'algorithme de Girvan-Newman qui sera décrit plus loin, de manière à obtenir une partition des nœuds dans des groupes.

Puis, une opération de correction 403 des partitions est mise en œuvre : chaque partition du graphe est corrigée par application sur chaque nœud d'un algorithme des plus proches voisins (décrit en détail ci-après) pour déterminer l'appartenance la plus probable à un groupe de nœuds consommateurs 5. Ensuite, la pertinence du regroupement des nœuds dans un groupe est mesurée par la conductance (opération 404). Dans une opération 405, les nœuds du groupe avec la meilleure connectivité sont détachés du graphe des routes.

La boucle est réitérée sur le graphe ainsi simplifié : les nœuds restants sont de nouveau découper en groupe par application de l'algorithme de détection de groupes (répétition de l'opération 402), et ainsi de suite. Les itérations sont stoppées lorsqu'un critère d'arrêt est atteint, ou lorsqu'il ne reste qu'un seul groupe.

L'exemple de l'algorithme de Girvan-Newmann (« *Edge Betweenness* ») va maintenant être décrit en détail.

À la place de déterminer les liens centraux indispensables à la structure d'un groupe, l'algorithme divisif « *edge betweenness* » est prévu pour détecter les liens connectant des groupes de nœuds les uns avec les autres. Ainsi, plutôt que de construire des groupes par addition de liens forts sur un ensemble de nœuds non connectés, les groupes sont mis en évidence par suppression successive de liens intergroupes. La figure 7 représente l'identification du lien $B_{i,j}$ ayant la plus forte mesure d'intermédiarité.

Pour identifier les liens intergroupes, c'est à dire ceux correspondant à une mesure de centralité d'intermédiarité forte, plusieurs moyens sont connus :

- intermédiarité du plus court chemin (ou « *shortest-path betweenness* ») : déterminer les chemins les plus courts entre deux nœuds du graphe et compter le nombre de fois que chaque lien est emprunté ;
- intermédiarité de la marche aléatoire (ou « *Randotn-walk betweenness* ») : établir des chemins aléatoires entre deux nœuds, compter le nombre de fois que chaque lien est emprunté et additionner ce nombre pour chaque paire de nœuds du graphe ;
- intermédiarité courant-débit « *Current-flow betweenness* » : calculer la valeur absolue du courant entre deux nœuds, sommée sur toutes les paires de nœuds sources et puits du graphe.

Dans « M. E. J. Newman et M. Girvan, Finding and evaluating community structure in networks, Phys. Rev. E 69, 026113 (2004) dans Newman et Girvan (2004) », les algorithmes divisifs (« *edge betweenness* ») peuvent être définis de la manière suivante :

    i. calculer des scores de centralités d'intermédiarité de tous les liens dans le graphe,

    ii. trouver le lien avec le score le plus élevé et le supprimer du réseau,

    iii. recalculer les centralités d'intermédiarité pour tous les liens restants,

    iv. répéter l'étape ii tant que des liens de forte centralité peuvent être supprimés sans dégrader les groupes déterminés aux itérations précédentes ou que le critère de maximisation de la fonction de modularité soit satisfait.

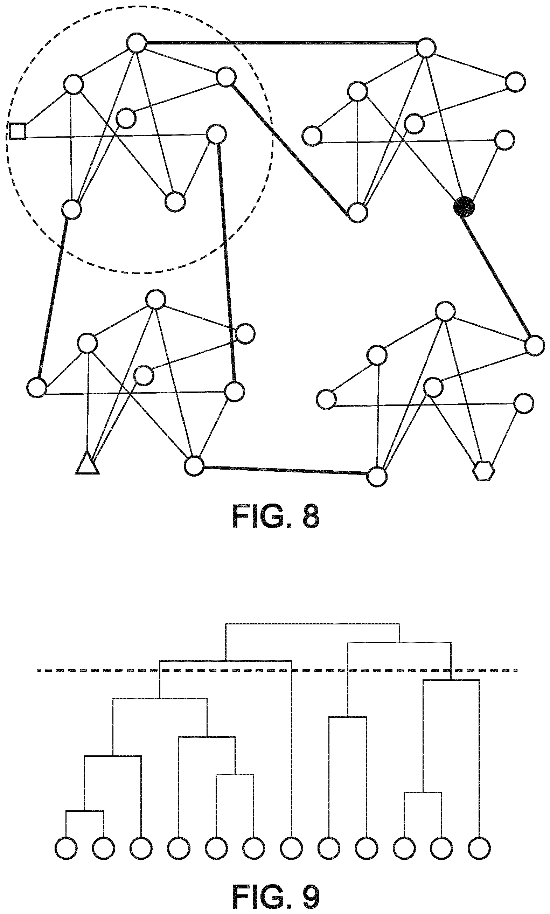

La figure 8 est un exemple de groupes identifiés par la suppression successive des liens en gras, ici quatre groupes. La figure 9 représente un dendrogramme (ou arbre de clusters) qui peut être obtenu après mise en œuvre d'un algorithme divisif. Les extrémités des branches (en bas sur la figure 9) représentent les nœuds du graphe. L'arbre représente un réseau connecté découpé en groupes de plus en plus petits, suivant un parcours descendant de l'arbre. La ligne en pointillé indique la répartition des nœuds dans quatre communautés et le nombre de groupes choisis.

L'algorithme des plus proches voisins va maintenant être décrit. Avant simplification du graphe par suppression du groupe de plus faible conductance, chaque nœud est réaffecté au groupe le plus probable suivant l'identification du groupe de ses plus proches voisins (ou nœuds les plus similaires).

Cet algorithme comprend les opérations suivantes :

- Pour chaque nœud :

  i. Identifier les nœuds voisins (ceux avec lesquels au moins un lien est partagé),
  ii. Pour chaque nœud voisin, calculer le taux de voisins communs (voir ci-après),
  iii. Affecter au nœud le groupe des voisins les plus proches.

La similarité entre deux nœuds est mesurée par l'indice de Jaccard, tel que défini par exemple dans « Linyuan Lu et Tao Zhou, Link prédiction in complex network : A survey, Phys. A 390 (2011) » :

$$S(X,Y) = \frac{\Gamma(X) \cap \Gamma(Y)}{\Gamma(X) \cup \Gamma(Y)}$$

avec $\Gamma(X)$ et $\Gamma(Y)$ étant l'ensemble de voisins du nœud X, respectivement Y.

Le numérateur représente la liste des voisins communs aux nœuds X et Y. Le dénominateur représente la liste complète de tous leurs voisins. L'indice S mesure le taux de voisins communs et est compris entre 0 et 1. Plus le taux est élevé, plus la probabilité d'appartenance à un même groupe des deux nœuds X et Y est forte.

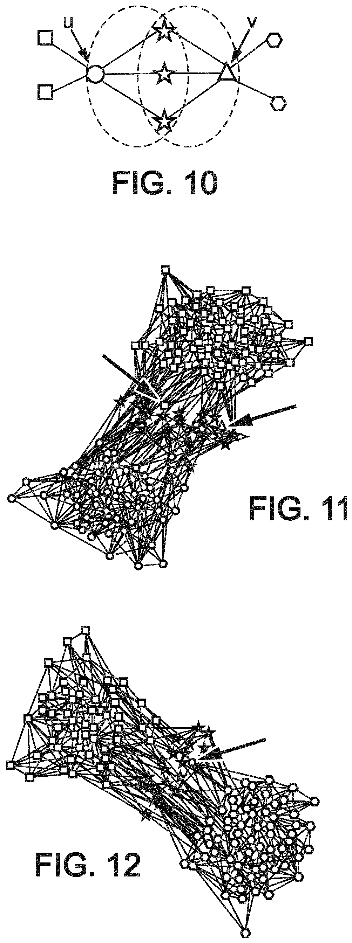

La figure 10 représente un exemple de deux nœuds u et v ayant trois voisins communs. La figure 11 montre un graphe dans lequel l' affectation initiale de deux nœuds (identifiés par des flèches) est erronée. La mise en œuvre de l'algorithme des plus proches voisins permet de réaffecter à ces deux nœuds le groupe de leurs plus proches voisins. La figure 12 montre un graphe dans lequel l'affectation initiale d'un nœud (identifié par une flèche) semble erronée. Ici, il est choisi de réaffecter un nœud à un groupe si et seulement si plus de la moitié des nœuds voisins appartiennent à un même groupe. La mise en œuvre de l'algorithme des plus proches voisins conduit donc, ici, à laisser le nœud affecté au groupe initial même si plus de la moitié des nœuds voisins sont affectés à deux autres groupes.

Le partitionnement issu des opérations précitées peut être amélioré en appliquant de manière successive l'algorithme « *edge betweenness* » (opération 402) sur les nœuds appartenant aux groupes les moins denses. Autrement dit, l'opération 401 peut elle-même être une boucle itérative. Les nœuds appartenant au groupe le plus pertinent sont déterminés par la mesure de la conductance, c'est-à-dire la fraction de liens sortants de la communauté sur le volume total de liens des nœuds du groupe. Plus la conductance est faible, moins les nœuds du groupe partagent de relations avec les nœuds des autres groupes.

La formule de la conductance $\Phi$ par groupe i est la suivante :

$$\Phi_i = \frac{C_s}{2m_s + C_s}$$

avec $C_s$ étant le nombre de liens s'étendant au-delà du groupe (vers des nœuds d'autres groupes), et
$m_s$ étant le nombre de liens dont l'une au moins des extrémités est un nœud du groupe i

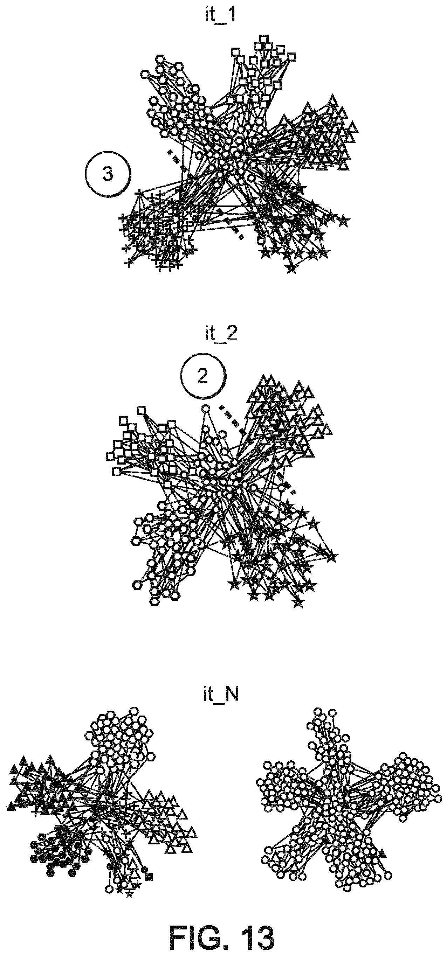

La figure 13 représente une succession d'itérations de détection de groupes. À la première itération, le groupe référencé 3 présente la conductance la plus faible. Les nœuds et les liens du groupe 3 sont donc supprimés du graphe. À la deuxième itération, le groupe 2 présente la conductance la plus faible. Les nœuds et les liens du groupe 2 sont donc à leur tour supprimés du graphe. À l'issue de la dernière itération N, 10 groupes ont été successivement identifiés et éliminés. Quatre nœuds restent non reliés au reste et sont donc considérés comme isolés.

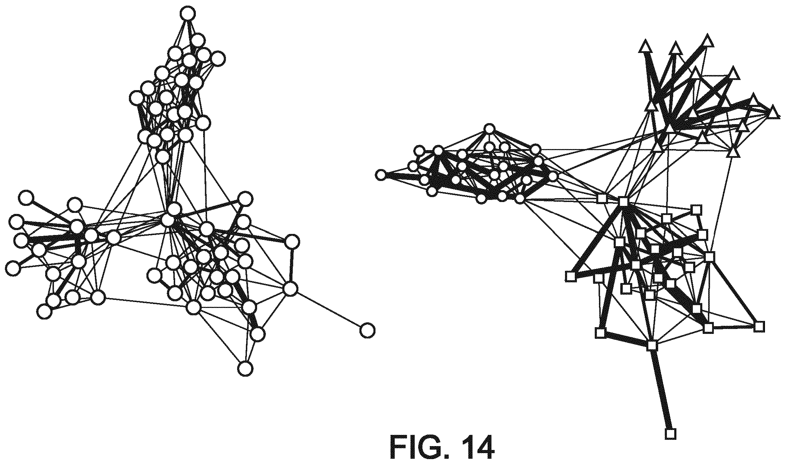

La figure 14 montre les résultats d'un essai de la demanderesse sur des routes de communication créées selon le protocole CPL G3 avec 60 nœuds consommateurs 5. La partie gauche montre le graphe obtenu à l'issue de la première partie du procédé (phase d'observation et construction du graphe). La partie droite montre le résultat obtenu après application de l'algorithme de détection de groupes : trois groupes ont été identifiés et présentent respectivement des conductances de 0,06, 0,13 et 0,13.

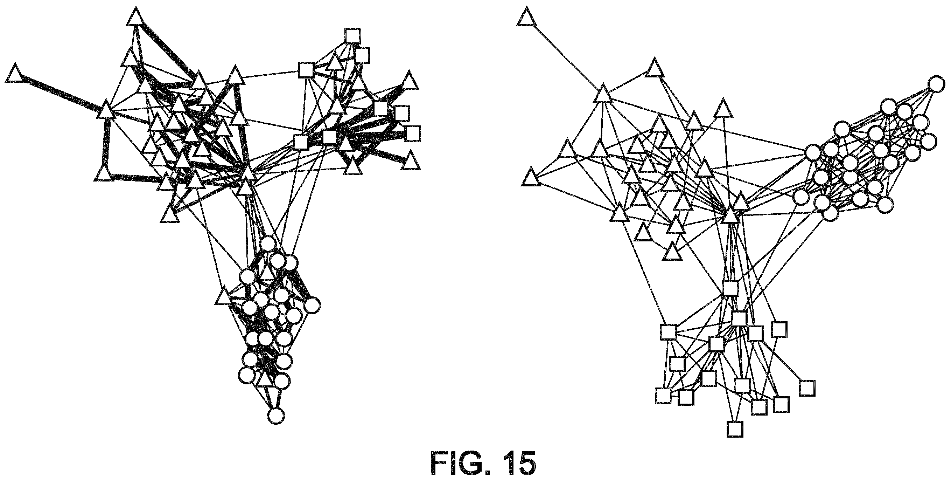

La figure 15 montre une comparaison d'un graphe établi pour des nœuds dont l'attribution initiale des groupes correspond aux données cartographique d'un SIG existant (à gauche de la figure) et du même graphe après correction et réaffectation des groupes selon le procédé. Dans cette exemple, le SIG comprend des données relatives au rattachement des nœuds (ou compteurs) aux divers départs 3 d'un nœud source 1, ici un poste de transformation basse tension. En partie gauche, les trois différentes formes utilisées pour représenter les nœuds consommateurs 5 indiquent respectivement le départ 3 auquel est sensé être relié chaque nœud 5 d'après les informations du SIG.

Dans l'essai mené par la demanderesse, des vérifications sur le terrain ont été menées pour identifier avec certitude les erreurs éventuelles :

- sept nœuds répertoriés par erreur dans le SIG comme reliés au départ 3 correspondant au signe « triangle » sont en réalité reliés au départ 3 correspondant au signe « carré » ; et
- sept nœuds répertoriés par erreur dans le SIG comme reliés au départ 3 correspondant au signe « triangle » sont en réalité reliés au départ 3 correspondant au signe « rond ».

Comme le montre la partie gauche de la figure, le procédé permet d'identifier les nœuds 5 dont le rattachement est erroné à partir de l'observation des routes de communication établies sur le réseau de nœuds. Outre la détection des erreurs elle-même, le procédé permet de déterminer comment les corriger. Autrement dit, il est possible d'identifier le départ 3 de rattachement correct de chaque nœud consommateur 5 mal référencé.

Durant ses essais, la demanderesse a appliqué le procédé sur 81 nœuds source 1 et 7698 nœuds consommateurs 5. La répartition des cas étudiés ici est la suivante :

- 39 nœuds source 1 reliés à moins de 50 nœuds consommateurs 5 ;
- 19 nœuds source 1 reliés à plus de 50 nœuds consommateurs 5 et moins de 100 nœuds consommateurs 5 ;
- 23 nœuds source 1 reliés à plus de 100 nœuds consommateurs 5 ; et
- 78% des nœuds sources 1 étudiés comprennent entre 2 et 6 départs 3.

Les erreurs ou absences de résultats semblent essentiellement dépendantes du nombre de nœuds consommateurs 5 par groupe et du nombre de départs par nœud source 1. En effet, plus le nombre de nœuds consommateurs 5 par départ est faible, plus les marges d'erreur des algorithmes de détection de groupes augmentent.

Pour les essais, des vérifications sur le terrain ont permis de levé tout doute et de détecter toute erreur à l'issue de l'application du procédé. Il a été obtenu un taux de confirmation ou de correction valide de 96%. Pour 4% des nœuds consommateurs 3 le procédé n'a pas permis d'identifier un départ de rattachement ou a identifié un départ de rattachement de manière incorrecte.

Dans les exemples précédents, les résultats des procédés, c'est-à-dire les partitionnement en groupes des nœuds, sont utilisés pour vérifier, et optionnellement corriger, des cartographies préexistantes. Dans des variantes, les cartographies existantes contiennent peu d'informations fiables ou bien n'existent pas du tout. De tel procédé peuvent être mis en œuvre pour créer une telle cartographie sans se baser sur une cartographie préexistante. Ainsi, par « construction » d'une cartographie, on entend ici créer une cartographie à partir de rien ou bien créer une cartographie par vérification et/ou correction d'une cartographie préexistante.

L'invention est définie par les revendications.

## Revendications

**1.** Procédé mis en œuvre par ordinateur de construction d'une cartographie (100) d'un réseau de distribution électrique comprenant au moins un nœud source (1) incluant une pluralité de sorties (3), et une pluralité de nœuds consommateurs (5) alimentés chacun par une unique sortie (3), à chaque couple de nœuds ($5_x$, $5_y$) correspondant un lien ($7_{x,y}$) reliant les deux nœuds ($5_x$, $5_y$) l'un à l'autre,

chacun des nœuds consommateurs ($5_j$) étant apte à communiquer avec le nœud source (li) par au moins une route ($9_{i,j}$) de communication sur le réseau de distribution électrique, chaque route ($9_{i,j}$) étant formée :

- d'un unique lien ($7_{i,j}$) reliant directement le nœud source (li) au nœud consommateur ($5_j$), ou
- d'une suite de liens ($7_{i,x}$, $7_{x,y}$, $7_{y,z}$, $7_{z,j}$) reliant indirectement le nœud source ($1_i$) au nœud consommateur ($5_j$) par l'intermédiaire d'au moins un autre nœud consommateur ($5_x$, $5_y$, $5_z$) formant un nœud relais, le procédé comprenant :

a) pendant au moins une période d'observation et pour chaque couple de nœuds consommateurs ($5_x$, $5_y$ ; $5_x$, $5_z$; $5_x$, $5_j$; $5_y$, $5_z$; $5_y$, $5_j$; $5_z$, $5_j$), compter (201) le nombre de fois que le lien correspondant ($7_{x,y}$, $7_{x,z}$, $7_{x,j}$, $7_{y,z}$, $7_{y,j}$, $7_{z,j}$) forme partie d'une route ($9_{i,j}$) de communication entre le nœud source ($1_i$) et un nœud consommateur ($5_j$),

b) construire (202) un graphe dans lequel chaque sommet correspond à un nœud consommateur ($5_x$, $5_y$, $5_z$, $5_j$) et le poids ($p_{x,y}$, $p_{x,z}$, $p_{x,j}$, $p_{y,z}$, $p_{y,j}$, $p_{z,j}$) de chaque arc entre deux sommets est attribué en fonction du nombre de fois que le lien ($7_{x,y}$, $7_{x,z}$, $7_{x,j}$, $7_{y,z}$, $7_{y,j}$, $7_{z,j}$) qui relie le couple de nœuds consommateurs correspondant ($5_x$, $5_y$ ; $5_x$, $5_z$ ; $5_y$, $5_z$) forme partie d'une route (9) de communication établie entre le nœud source (1) et un nœud consommateur (5),

c) partitionner les sommets du graphe en groupes par application d'algorithmes agencés de sorte que :

- deux sommets entre lesquels le poids (p) de l'arc est élevé et/ou deux sommets partageant un nombre élevé de voisins communs tendent à être classés dans un même groupe, tandis que
- deux sommets classés dans des groupes distincts tendent à présenter un poids (p) de lien faible ou nul et/ou à posséder peu de voisins communs,

d) comparer la composition des groupes obtenue au rattachement des nœuds consommateurs (5) sur les sorties (3) selon une cartographie (100) préexistante,

e) déduire de la comparaison l'exactitude de la cartographie (100) ou l'existence d'au moins une erreur,

f) en cas de déduction d'au moins une erreur, corriger la cartographie (100) en fonction de la composition des groupes obtenue.

2. Procédé selon la revendication 1, dans lequel les poids (p) sont attribués en fonction du nombre de fois que le lien (7) correspondant forme partie d'une route (9) pour un nombre constant de routes ($9_{i,j}$) entre chaque couple de nœud source (li) et de nœud consommateur ($5_j$).

3. Procédé selon l'une des revendications précédentes, dans lequel, à l'issu du comptage, une opération intermédiaire d'échantillonnage aléatoire est mise en œuvre et les opérations de partitionnement sont effectuées à partir des échantillons obtenus, la succession des opérations d'échantillonnage, de construction de graphe et de partitionnement font l'objet d'une boucle itérative.

4. Procédé selon l'une des revendications précédentes, dans lequel les communications entre les nœuds (1, 5) s'établissent selon une architecture distribuée par Courant Porteur en Ligne sur le réseau de distribution électrique.

5. Procédé selon l'une des revendications précédentes, dans lequel le partitionnement inclut la mise en œuvre d'un algorithme divisif, d'un algorithme agglomératif, d'un algorithme d'optimisation par vérification de densité ou d'une combinaison de tels algorithmes.

6. Système comprenant au moins un concentrateur et une unité de traitement, l'unité de traitement incluant une mémoire apte à stocker au moins une cartographie (100) d'un réseau de distribution électrique, le réseau de distribution électrique comprenant au moins un nœud source (1) incluant une pluralité de sorties (3), et une pluralité de nœuds consommateurs (5) alimentés chacun par une unique sortie (3), à chaque couple de nœuds ($5_x$, $5_y$) correspondant un lien ($7_{x,y}$) reliant les deux nœuds ($5_x$, $5_y$) l'un à l'autre,

chacun des nœuds consommateurs ($5_j$) étant apte à communiquer avec le nœud source (li) par au moins une route ($9_{i,j}$) de communication sur le réseau de distribution électrique, chaque route ($9_{i,j}$) étant formée :

- d'un unique lien ($7_{i,j}$) reliant directement le nœud source ($1_i$) au nœud consommateur ($5_j$), ou
- d'une suite de liens ($7_{i,x}$, $7_{x,y}$, $7_{y,z}$, $7_{z,j}$) reliant indirectement le nœud source ($1_i$) au nœud consommateur ($5_j$) par l'intermédiaire d'au moins un autre nœud consommateur ($5_x$, $5_y$, $5_z$) formant un nœud relais,

le concentrateur étant agencé pour

a) collecter et transmettre à l'unité de traitement des données de comptage du nombre de fois que chaque lien ($7_{x,y}$, $7_{x,z}$, $7_{x,j}$, $7_{y,z}$, $7_{y,j}$, $7_{z,j}$) correspondant à chaque couple de nœuds consommateurs ($5_x$, $5_y$ ; $5_x$, $5_z$ ; $5_x$, $5_j$; $5_y$, $5_z$; $5_y$, $5_j$; $5_z$, $5_j$) forme partie d'une route ($9_{i,j}$) de communication entre le nœud source ($1_i$) et un nœud consommateur ($5_j$) pendant au moins une période d'observation,

l'unité de traitement étant agencée pour réceptionner les données de comptage et

b) construire (202) un graphe dans lequel chaque sommet correspond à un nœud consommateur ($5_x$, $5_y$, $5_z$, $5_j$) et le poids ($p_{x,y}$, $p_{x,z}$, $p_{x,j}$, $p_{y,z}$, $p_{y,j}$, $p_{z,j}$) de chaque arc entre deux sommets est attribué en fonction du nombre de fois que le lien ($7_{x,y}$, $7_{x,z}$, $7_{x,j}$, $7_{y,z}$, $7_{y,j}$, $7_{z,j}$) qui relie le couple de nœuds consommateurs correspondant ($5_x$, $5_y$ ; $5_x$, $5_z$ ; $5_y$, $5_z$) forme partie d'une route (9) de communication établie entre le nœud source (1) et un nœud consommateur (5),

c) partitionner les sommets du graphe en groupes par application d'algorithmes agencés de sorte que :

- deux sommets entre lesquels le poids (p) de l'arc est élevé et/ou deux sommets partageant un nombre élevé de voisins commun tendent à être classés dans un même groupe, tandis que
- deux sommets classés dans des groupes distincts tendent à présenter un poids (p) de lien faible ou nul et/ou à posséder peu de voisins communs,

d) comparer la composition des groupes obtenue au rattachement des nœuds consommateurs (5) sur les sorties (3) selon une cartographie (100) préexistante,

e) déduire de la comparaison l'exactitude de la cartographie (100) ou l'existence d'au moins une erreur,

f) en cas de déduction d'au moins une erreur, corriger la cartographie (100) en fonction de la composition des groupes obtenue.

**7.** Programme informatique comportant des instructions pour la mise en œuvre du procédé selon l'une des revendications 1 à 5, lorsque ce programme est exécuté par un processeur.

**8.** Support d'enregistrement non transitoire lisible par un ordinateur sur lequel est enregistré un programme comprenant des instructions pour la mise en œuvre du procédé selon l'une des revendications 1 à 5.

**Patentansprüche**

**1.** Computerimplementiertes Verfahren zum Aufbau einer Kartographie (100) eines elektrischen Verteilungsnetzes, das wenigstens einen Quellenknoten (1) mit einer Vielzahl von Ausgängen (3) und eine Vielzahl von Verbraucherknoten (5) umfasst, die jeweils von einem einzigen Ausgang (3) versorgt werden, wobei jedem Verbraucherknotenpaar ($5_x$, $5_y$) eine Verbindung ($7_{x,y}$) entspricht, die die beiden Knoten ($5_x$, $5_y$) miteinander verbindet, wobei jeder der Verbraucherknoten ($5_j$) in der Lage ist, mit dem Quellknoten ($1_i$) über wenigstens eine Kommunikationsroute ($9_{i,j}$) auf dem Stromverteilungsnetz zu kommunizieren, wobei jede Route ($9_{i,j}$) gebildet wird:

- aus einer einzelnen Verbindung ($7_{i,j}$), die den Quellknoten ($1_i$) direkt mit dem Verbraucherknoten ($5_j$) verbindet, oder
- aus einer Folge von Verbindungen ($7_{i,x}$, $7_{x,y}$, $7_{y,z}$, $7_{z,j}$), die den Quellknoten ($1_i$) indirekt über wenigstens einen anderen Verbraucherknoten ($5_x$, $5_y$, $5_z$), der einen Relaisknoten bildet, mit dem Verbraucherknoten ($5_j$) verbinden, wobei das Verfahren Folgendes umfasst:

a) während wenigstens einer Beobachtungsperiode und für jedes Verbraucherknotenpaar ($5_x$, $5_y$; $5_x$, $5_z$; $5_x$, $5_j$; $5_y$, $5_z$; $5_y$, $5_j$; $5_z$, $5_j$), Zählen (201), wie häufig die entsprechende Verbindung ($7_{x,y}$, $7_{x,z}$, $7_{x,j}$, $7_{y,z}$, $7_{y,j}$, $7_{z,j}$) Teil einer Kommunikationsroute (9) zwischen dem Quellknoten ($1_i$) und einem Verbraucherknoten ($5_j$) ist,
b) Erstellen (202) eines Graphen, wobei jeder Scheitelpunkt einem Verbraucherknoten ($5_x$, $5_y$, $5_z$, $5_j$) entspricht und das Gewicht ($p_{x,y}$, $p_{x,z}$, $p_{x,j}$, $p_{y,z}$, $p_{y,j}$, $p_{z,j}$) jedes Bogens zwischen zwei Scheitelpunkten in Abhängigkeit davon zugewiesen wird, wie häufig die Verbindung ($7_{x,y}$, $7_{x,z}$, $7_{x,j}$, $7_{y,z}$, $7_{y,j}$, $7_{z,j}$), die das entsprechende Verbraucherknotenpaar ($5_x$, $5_y$; $5_x$, $5_z$; $5_y$, $5_z$) verbindet, einen Teil einer zwischen dem Quellknoten (1) und einem Verbraucherknoten (5) eingerichteteten Kommunikationsroute (9) bildet,
c) Partitionieren der Scheitelpunkte des Graphen in Gruppen durch Anwendung von Algorithmen, so angeordnet, dass:

- zwei Scheitelpunkte, zwischen denen das Gewicht (p) des Bogens hoch ist und/oder zwei Scheitelpunkte, die eine hohe Anzahl gemeinsamer Nachbarn teilen, dazu neigen, in derselben Gruppe klassifiziert zu werden, während
- zwei Scheitelpunkte, die in verschiedenen Gruppen klassifiziert sind, dazu neigen, ein niedriges oder kein Verbindungsgewicht (p) aufzuweisen und/oder wenige gemeinsame Nachbarn zu haben,

d) Vergleichen der Gruppenzusammensetzung, die sich aus der Verbindung der Verbraucherknoten (5) mit den Ausgängen (3) gemäß einer bereits bestehenden Kartographie (100) ergibt,
e) aus dem Vergleich Ableiten der Genauigkeit der Kartographie (100) oder des Vorliegens wenigstens eines Fehlers,
f) im Falle der Feststellung wenigstens eines Fehlers, Korrigieren der Kartographie (100) entsprechend der erhaltenen Gruppenzusammensetzung.

**2.** Verfahren nach Anspruch 1, wobei die Gewichte (p) in Abhängigkeit davon vergeben werden, wie häufig die entsprechende Verbindung (7) Teil einer Route (9) für eine konstante Anzahl von Routen ($9_{i,j}$) zwischen jedem Paar von Quellknoten ($1_i$) und Verbraucherknoten ($5_j$) ist.

**3.** Verfahren nach einem der vorhergehenden Ansprüche, wobei nach der Zählung eine Zwischenoperation der Zufallsstichprobe durchgeführt wird und die Partitionierungsoperationen anhand der erhaltenen Stichproben durchgeführt werden, wobei die Abfolge der Operationen der Zufallsstichprobe, der Graphenbildung und der Partitionierung Gegenstand einer Wiederholungsschleife sind.

**4.** Verfahren nach einem der vorhergehenden Ansprüche, wobei die Kommunikation zwischen den Knoten (1, 5) nach einer verteilten Powerline-Architektur (PLC) über das Stromverteilungsnetz erfolgt.

**5.** Verfahren nach einem der vorhergehenden Ansprüche, wobei die Partitionierung die Implementierung eines Divisionsalgorithmus, eines agglomerativen Algorithmus, eines Optimierungsalgorithmus durch Dichteverifikation oder einer Kombination solcher Algorithmen beinhaltet.

6. System, umfassend wenigstens einen Konzentrator und eine Verarbeitungseinheit, wobei die Verarbeitungseinheit einen Speicher umfasst, der wenigstens eine Kartographie (100) eines Stromverteilungsnetzes speichern kann, wobei das Stromverteilungsnetz wenigstens einen Quellknoten (1) mit einer Vielzahl von Ausgängen (3) und eine Vielzahl von Verbraucherknoten (5) umfasst, die jeweils von einem einzigen Ausgang (3) gespeist werden, wobei jedem Verbraucherknotenpaar ($5_x$, $5_y$) eine Verbindung ($7_{x,y}$) entspricht, die die beiden Knoten ($5_x$, $5_y$) miteinander verbindet,
wobei jeder der Verbraucherknoten ($5_j$) in der Lage ist, mit dem Quellknoten ($1_i$) über wenigstens eine Kommunikationsroute ($9_{i,j}$) auf dem Stromverteilungsnetz zu kommunizieren, wobei jede Route ($9_{i,j}$) gebildet wird aus :

- einer einzelnen Verbindung ($7_{i,j}$), die den Quellknoten ($1_i$) direkt mit dem Verbraucherknoten ($5_j$) verbindet, oder
- einer Folge von Verbindungen ($7_{i,x}$, $7_{x,y}$, $7_{y,z}$, $7_{z,j}$), die den Quellknoten ($1_i$) indirekt über wenigstens einen anderen Verbraucherknoten ($5_x$, $5_y$, $5_z$), der einen Relaisknoten bildet, mit dem Verbraucherknoten ($5_j$) verbinden, wobei der Konzentrator dazu angeordnet ist:

a) Zähldaten darüber zu sammeln und an die Verarbeitungseinheit zu übertragen, wie häufig jede Verbindung ($7_{x,y}$, $7_{x,z}$, $7_{x,j}$, $7_{y,z}$,$7_{y,j}$, $7_{z,j}$), die jedem Verbraucherknotenpaar ($5_x$, $5_y$; $5_x$, $5_z$; $5_x$, $5_j$; $5_y$, $5_z$; $5_y$, $5_j$; $5_z$, $5_j$) entspricht, während wenigstens eines Beobachtungszeitraums einen Teil einer Kommunikationsroute ($9_{i,j}$) zwischen dem Quellknoten ($1_i$)und einem Verbraucherknoten ($5_i$) bildet,
wobei die Verarbeitungseinheit dazu angeordnet ist, die Zähldaten zu empfangen, und
b) Erstellen (202) eines Graphen, wobei jeder Scheitelpunkt einem Verbraucherknoten ($5_x$, $5_y$, $5_z$, $5_j$) entspricht und das Gewicht ($p_{x,y}$, $p_{x,z}$, $p_{x,j}$, $p_{y,z}$, $p_{y,j}$, $p_z$j) jedes Bogens zwischen zwei Scheitelpunkten in Abhängigkeit davon zugewiesen wird, wie häufig die Verbindung ($7_{x,y}$, $7_{x,z}$, $7_{x,j}$, $7_{y,z}$,$7_{y,j}$, $7_{z,j}$), die das entsprechende Verbraucherknotenpaar ($5_x$, $5_y$; $5_x$, $5_z$; $5_y$, $5_z$) verbindet, einen Teil einer Kommunikationsroute (9) zwischen dem Quellknoten (1) und einem Verbraucherknoten (5) bildet,
c) Partitionieren der Scheitelpunkte des Graphen in Gruppen durch Anwendung von Algorithmen, so angeordnet, dass:

- zwei Scheitelpunkte, zwischen denen das Gewicht (p) des Bogens hoch ist und/oder zwei Scheitelpunkte, die eine hohe Anzahl gemeinsamer Nachbarn teilen, dazu neigen, in derselben Gruppe klassifiziert zu werden, während
- zwei Scheitelpunkte, die in verschiedenen Gruppen klassifiziert sind, dazu neigen, ein niedriges oder kein Verbindungsgewicht (p) aufzuweisen und/oder wenige gemeinsame Nachbarn zu haben,

d) Vergleichen der Gruppenzusammensetzung, die sich aus der Verbindung der Verbraucherknoten (5) mit den Ausgängen (3) gemäß einer bereits bestehenden Kartographie (100) ergibt,
e) aus dem Vergleich Ableiten der Genauigkeit der Kartographie (100) oder des Vorliegens wenigstens eines Fehlers,
f) im Falle der Feststellung wenigstens eines Fehlers, Korrigieren der Kartographie (100) entsprechend der erhaltenen Gruppenzusammensetzung.

7. Computerprogramm, umfassend Anweisungen zur Durchführung des Verfahrens nach einem der Ansprüche 1 bis 5, wenn das Programm von einem Prozessor ausgeführt wird.

8. Computerlesbares, nicht-transitorisches Aufzeichnungsmedium, auf dem ein Programm aufgezeichnet ist, das Anweisungen zur Durchführung des Verfahrens nach einem der Ansprüche 1 bis 5 umfasst.

**Claims**

1. Method for implementing by computer a construction of a mapping (100) of an electrical distribution network comprising at least one source node (1) including a plurality of outputs (3), and a plurality of consuming nodes (5) each supplied by a single output (3), a link ($7_{x,y}$) connecting two nodes ($5_x$, $5_y$) to each other corresponding to each pair of nodes ($5_x$, $5_y$),

each of the consuming nodes (5j) being able to communicate with the source node ($1_i$) by at least one communication route ($9_{i,j}$) on the electrical distribution network,
each route (9i,j) being formed by:

- a single link (7i,j) directly connecting the source node ($1_i$)to the consuming node (5j), or
- a series of links ($7_{i,x}$, $7_{x,y}$, $7_{y,z}$, $7_{z,j}$) indirectly connecting the source node ($1_i$)to the

consuming node (5j) by means of at least one other consuming node ($5_x$, $5_y$, $5_z$) forming a relay node, the method comprising:

a) during at least one observation period and for each pair of consuming nodes ($5_x$, $5_y$; $5_x$, $5_z$; $5_x$, 5j; $5_y$, $5_z$; $5_y$, 5j; $5_z$, 5j), counting (201) the number of times that the corresponding link ($7_{x, y}$, $7_{x, z}$, $7_{x, j}$, $7_{y, z}$, $7_{y, j}$, $7_{z, j}$) forms part of a communication route (9i, j) between the source node ($1_i$) and a consuming node (5j),

b) constructing (202) a graph wherein each vertex corresponds to a consuming node ($5_x$, $5_y$, 5z, 5j) and the weight ($p_{x,y}$, $p_{x,z}$, $p_{x,j}$, $p_{y,z}$, $p_{y,j}$, $p_{z,j}$) of each arc between two vertices is attributed according to the number of times that the link ($7_{x,y}$, $7_{x,z}$, $7_{x,j}$, $7_{y,z}$, $7_{y,j}$, $7_{z,j}$) that connects the corresponding pair of consuming nodes ($5_x$, $5_y$; $5_x$, $5_z$; $5_y$, $5_z$) forms part of a communication route (9) established between the source node (1) and a consuming node (5),

c) partitioning the vertices of the graph in groups by applying algorithms arranged so that:

- two vertices between which the weight (p) of the arc is high and/or two vertices sharing a large number of common neighbours tend to be classified in the same group, while
- two vertices classified in distinct groups tend to have a low or zero link weight (p) and/or to possess few common neighbours,

d) comparing the composition of the obtained groups with the attachment of the consuming nodes (5) to the outputs (3) in accordance with a pre-existing mapping (100),

e) deducing from the comparison the exactitude of the mapping (100) or the existence of at least one error,

f) in the case of the deducing of at least one error, correcting the mapping (100) according to the composition of the groups obtained.

2. Method according to claim 1, wherein the weights (p) are attributed according to the number of times that the corresponding link (7) forms part of a route (9) for a constant number of routes ($9_{i,j}$) between each pair of source node ($1_i$) and consuming node

(5j).

3. Method according to one of the preceding claims, wherein, at the end of the counting, an intermediate random-sampling operation is implemented and the partitioning operations are implemented from the samples obtained, the succession of sampling operations, graph construction and partitioning are the subject of an iterative loop.

4. Method according to one of the preceding claims, wherein the communications between the nodes (1, 5) are established in accordance with a distributed powerline architecture on the electrical distribution network.

5. Method according to one of the preceding claims, wherein the partitioning includes the implementation of a divisive algorithm, an agglomerative algorithm, a density-check optimisation algorithm or a combination of such algorithms.

6. System comprising at least one concentrator and a processing unit, the processing unit including a memory able to store at least one mapping (100) of an electrical distribution network, the electrical distribution network comprising at least one source node (1) including a plurality of outputs (3), and a plurality of consuming nodes (5) each supplied by a single output (3), a link ($7_{x, y}$) connecting two nodes ($5_x$, $5_y$) to each other corresponding to each pair of nodes ($5_x$, $5_y$),

each of the consuming nodes (5j) being able to communicate with the source node ($1_i$) by at least one communication route ($9_{i,j}$) on the electrical distribution network, each route (9i,j) being formed by:

- a single link (7i,j) directly connecting the source node ($1_i$) to the consuming node (5j), or
- a series of links ($7_{i,x}$, $7_{x,y}$, $7_{y,z}$, $7_{z,j}$) indirectly connecting the source node ($1_i$) to the consuming node (5j) by means of at least one other consuming node ($5_x$, $5_y$, $5_z$) forming a relay node,

the concentrator being arranged for:

a) collecting and transmitting to the processing unit data counting the number of times that each link ($7_{x, y}$, $7_{x, z}$, $7_{x, j}$, $7_{y, z}$, $7_{y, j}$, $7_{z, j}$) corresponding to each pair of consuming nodes ($5_x$, $5_y$; $5_x$, $5_z$; $5_x$, 5j; $5_y$, $5_z$; $5_y$, 5j; $5_z$, 5j) forms part of a communication route (9i,j) between the source node ($1_i$) and a consuming node (5j) during at least one observation period,

the processing unit being arranged for receiving the counting data and

b) constructing (202) a graph wherein each vertex corresponds to a consuming node ($5_x$, $5_y$, $5z$, $5j$) and the weight ($p_{x,y}$, $p_{x,z}$, $p_{x,j}$, $p_{y,z}$, $p_{y,j}$, $p_{z,j}$,) of each arc between two vertices is attributed according to the number of times that the link ($7_{x,y}$, $7_{x,z}$, $7_x$, j, $7_{y,z}$, $7_{y,j}$, $7_{z,j}$) that connects the corresponding pair of consuming nodes ($5_x$, $5_y$; $5_x$, $5_z$; $5_y$, $5_z$) forms part of a communication route (9) established between the source node (1) and a consuming node (5),

c) partitioning the vertices of the graph in groups by applying algorithms arranged so that:

- two vertices between which the weight (p) of the arc is high and/or two vertices sharing a large number of common neighbours tend to be classified in the same group, while
- two vertices classified in distinct groups tend to have a low or zero link weight (p) and/or to possess few common neighbours,

d) comparing the composition of the groups obtained with the attachment of the consuming nodes (5) to the outputs (3) in accordance with a pre-existing mapping (100),

e) deducing from the comparison the exactitude of the mapping (100) or the existence of at least one error,

f) in the case of the deducing of at least one error, correcting the mapping (100) according to the composition of the groups obtained.

7. Computer program including instructions for implementing the method according to one of claims 1 to 5, when this program is executed by a processor.

8. Non-transient recording medium that can be read by a computer on which a program comprising instructions for implementing the method according to one of claims 1 to 5 is recorded.

FIG. 1

201
202

301

302

303

it = it + 1

it =
it_max ?    non

oui

305

306

# FIG. 2

401

402

403

404

405

it = it + 1

Stop ?

non

oui

406

FIG. 3

FIG. 4

FIG. 5

EP 3 652 699 B1

FIG. 6

$B_{ij} >> 0$

FIG. 7

FIG. 8

FIG. 9

FIG. 10

FIG. 11

FIG. 12

it_1

it_2

it_N

FIG. 13

FIG. 14

FIG. 15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5742795 A

**Littérature non-brevet citée dans la description**

- **M. E. J. NEWMAN.** Fast algorithm for detecting community structure in networks. *Phys. Rev. E,* 2004, vol. 69, 066133
- **M. E. J. NEWMAN ; M. GIRVAN.** Finding and evaluating community structure in networks. *Phys. Rev. E,* 2004, vol. 69, 026113
- **LINYUAN LU ; TAO ZHOU.** Link prédiction in complex network : A survey. *Phys. A,* 2011, vol. 390